# EUROPÄISCHE PATENTANMELDUNG

(11) **EP 0 972 660 A1**
(43) Veröffentlichungstag der Anmeldung: **19.01.2000**
(21) Anmeldenummer: 99111629.4
(22) Anmeldetag: 16.06.1999
(51) Int. Cl.: B60G 17/015

(54) **Sensoranordnung an einer Radaufhängung für ein Fahrzeug**

(30) Priorität: 11.07.1998 DE 19831248
(71) Anmelder: DaimlerChrysler AG, 70567 Stuttgart (DE)
(72) Erfinder: Steinert, Hans-Rudolf, 72475 Bitz (DE)

(57) **Zusammenfassung**

Eine Sensoranordnung an einer Radaufhängung für ein Fahrzeug, bei der ein Schwenkarm an einer Fahrzeugkarosserie schwenkbar gelagert ist und bei der ein Sensor zur Detektion der Relativlage zwischen Schwenkarm und Fahrzeugkarosserie ortsfest an der Fahrzeugkarosserie angebracht und mechanisch mit dem Schwenkarm gekoppelt ist, soll hinsichtlich einer vereinfachten Montage und Justage des Sensors verbessert werden.

Dies wird erfindungsgemäß dadurch erreicht, daß ein sensorseitiges Befestigungselement und ein schwenkarmseitiges Befestigungselement an einer gemeinsamen Befestigungsstelle an der Fahrzeugkarosserie befestigt sind.

## Beschreibung

Die Erfindung betrifft eine Sensoranordnung an einer Radaufhängung für ein Fahrzeug mit den Merkmalen des Oberbegriffes des Anspruches 1.

Bei Fahrzeugen, insbesondere bei Kraftfahrzeugen wie Personenkraftwagen, Lastkraftwagen und Omnibussen, kann es für eine Vielzahl von fahrzeugseitigen Steuer- und Regeleinrichtungen erforderlich sein, bei einer Radaufhängung die Relativlage zwischen einer Fahrzeugkarosserie und einem daran schwenkbar gelagerten Schwenkarm zu kennen. Beispielsweise ermittelt die elektronische Steuerung einer Niveauregulierungseinrichtung mit Hilfe der Relativlage zwischen einem mit einem Rad gekoppelten Querlenker und der Fahrzeugkarosserie für jede Achse bzw. für jedes Rad den erforderlichen Regelbedarf, um ein vorbestimmtes Fahrzeugniveau einzustellen. Zur Erkennung wird ein Sensor verwendet, der üblicherweise die Abweichung des Schwenkarmes von einer Ausgangs-Relativlage detektiert.

Bei einer aus der DE 39 19 040 A1 bekannten Sensoranordnung der eingangs genannten Art ist ein Schwenkarm an einer Fahrzeugkarosserie schwenkbar gelagert sowie ein Sensor zur Detektion der Relativlage zwischen Schwenkarm und Fahrzeugkarosserie ortsfest an der Fahrzeugkarosserie angebracht. Um die Relativlage zwischen Schwenkarm und Fahrzeugkarosserie zu erfassen, ist der Sensor mit dem Schwenkarm mechanisch gekoppelt.

Aus der DE 44 29 856 C1 ist eine Sensoranordnung bekannt, bei der eine Drehachse des Sensors koaxial zu einer Schwenkachse des Schwenkarms angeordnet ist, um welche der Schwenkarm der Radaufhängung beim Ein- und Ausfedern verschwenkbar an der Fahrzeugkarosserie gelagert ist.

Im Rahmen der Montage eines Fahrzeuges werden die einzelnen Bestandteile einer Radaufhängung zusammengesetzt und montiert. Durch die Vielzahl der dabei zusammengefügten Einzelteile können sich deren Herstellungstoleranzen aufsummieren, so daß zur Definition einer Ausgangs-Relativlage zwischen dem Schwenkarm der Radaufhängung und der Fahrzeugkarosserie in jedem Fall ein Toleranzausgleich für den Sensor durchgeführt werden muß. Zur Durchführung eines derartigen Toleranzausgleiches stehen mehrere Vorgehensweisen zur Verfügung. Bei Sensoren, die mit einer längenverstellbaren Regelstange ausgestattet sind, kann der Toleranzausgleich mechanisch durch eine entsprechende Längeneinstellung dieser Regelstange durchgeführt werden. Damit jedoch ein derartiger Toleranzausgleich durchführbar ist, muß am Einbauort des Sensors ausreichend Platz zur manuellen Justage der Regelstange vorhanden sein, was jedoch nicht für jeden Fahrzeug-Typ gewährleistet werden kann.

Bei anderen Sensoren kann der Toleranzausgleich elektronisch durchgeführt werden, wobei der jeweiligen Elektronik theoretisch jede beliebige Sensorstellung als Nullstellung vorgegeben werden kann. Bei Sensoren, deren Aufbau nur die Erfassung eines begrenzten Meßbereiches in Form von Abweichungen von einer Ausgangsstellung ermöglicht, hat jedoch eine von einer vorgegebenen Soll-Einbaulage tatsächlich abweichende Ist-Einbaulage in der Praxis eine Verkleinerung des Meßbereiches oder, wenn die Sensorelektronik eine derartige Eichung ermöglicht, eine reduzierte Meßgenauigkeit zur Folge.

Schließlich besteht - zumindest theoretisch - die Möglichkeit, den Sensor erst am fertigen Fahrzeug quasi als letzte Komponente zu montieren, um dann, während des Sensoreinbaus, diesen gleichzeitig in der gewünschten Ausrichtung zu justieren. Dies ist jedoch aufgrund der gegebenen Einbauverhältnisse regelmäßig nicht oder nur mit unverhältnismäßig großem Aufwand durchführbar.

Die vorliegende Erfindung beschäftigt sich mit dem Problem, eine Sensoranordnung der eingangs genannten Art hinsichtlich der Durchführung eines Toleranzausgleiches zu verbessern.

Dieses Problem wird erfindungsgemäß durch eine Sensoranordnung mit den Merkmalen des Anspruches 1 gelöst.

Die Erfindung beruht auf dem allgemeinen Gedanken, für den Schwenkarm und für den Sensor einen gemeinsamen Befestigungspunkt an der Fahrzeugkarosserie zu verwenden. Diese Maßnahme bewirkt, daß ein wesentliches Relativmaß zwischen Sensor und Schwenkwelle nur noch von den Herstellungstoleranzen des schwenkarmseitigen Befestigungselementes und des sensorseitigen Befestigungselementes abhängt und nicht, wie bei den herkömmlichen Sensoranordnungen, von der Aufaddierung der Toleranzen der vielen, an der Radaufhängung zusammengefaßten Einzelbauteile.

Bei der Ausbildung des schwenkarmseitigen und des sensorseitigen Befestigungselementes kann dann jeweils eine relativ enge Toleranz eingehalten werden, so daß hinsichtlich dieser relativen Anordnung zwischen Sensor und Schwenkarm kein Tolerenzausgleich durchgeführt werden muß. Beispielsweise werden ein Lager des Schwenkarmes (schwenkarmseitiges Befestigungselement) und ein Gehäuseteil des Sensors (sensorseitiges Befestigungselement) gemeinsam mit einer Schraube an der Fahrzeugkarosserie befestigt. Dann ist der Abstand zwischen dem Sensor und der gemeinsamen Befestigungsstelle des Schwenkarmes unabhängig von der tatsächlichen Anordnung der Befestigungsstelle an der Fahrzeugkarosserie, die sich in Abhängigkeit der Herstellungs- und Montagetoleranzen der an der Radaufhängung zusammenwirkenden Einzelteile ergibt. Um die optimale Ausrichtung für den Sensor relativ zum Schwenkarm zu erhalten, muß dann nur noch ein Winkel ausgerichtet werden, der zwischen einer durch die Befestigungsstelle und den Sensor verlaufenden ersten Geraden und einer durch die Befestigungsstelle und die Kopplungsstelle des Sensors an den Schwenkarm verlaufenden zweiten Geraden eingeschlossen ist.

Bei der erfindungsgemäßen Sensoranordnung kann somit ein Toleranzausgleich für die Relativlage des Sensors zumindest hinsichtlich des Abstandes zwischen dem Sensor und der Befestigungsstelle des Schwenkarmes entfallen. Die Einstellung der geforderten räumlichen Anordnung von Sensor zu Schwenkarm kann jedoch bei festliegendem Abstandsmaß relativ leicht und relativ genau durchgeführt werden. Ein diesbezüglicher Toleranzausgleich kann vorzugsweise elektronisch durchgeführt werden, ohne daß dabei der Meßbereich des Sensors oder dessen Meßgenauigkeit nennenswert beeinträchtigt wird.

Bei einer besonders vorteilhaften Ausführungsform der erfindungsgemäßen Sensoranordnung kann das sensorseitige Befestigungselement ein als separates Bauteil ausgebildeter Sensorhalter sein, an dem der Sensor befestigt ist. Ein derartiges Bauteil kann relativ preiswert und hochgenau, beispielsweise als Stanzteil, gefertigt werden, so daß die bisher verwendeten Sensoren ohne Veränderung weiterverwendet werden können. Der Sensorhalter weist dabei erste Befestigungsmittel auf, mit denen der Sensor am Sensorhalter befestigt werden kann, sowie zweite Befestigungsmittel, mit denen der Sensorhalter an der Fahrzeugkarosserie gemeinsam mit dem schwenkarmseitigen Befestigungselement befestigt werden kann. Dabei kann eine beliebig enge Toleranz für die Relativlage der ersten und zweiten Befestigungsmittel auf dem Sensorhalter eingehalten werden.

Entsprechend einer anderen Ausführungsform der erfindungsgemäßen Sensoranordnung kann die gemeinsame Befestigungsstelle von sensorseitigem Befestigungselement und schwenkarmseitigem Befestigungselement durch einen, die Schwenkachse des Schwenkarmes bildenden Lagerbolzen gebildet sein. Außerdem kann dann das schwenkarmseitige Befestigungselement durch den Lagerbolzen schwenkbar an der Fahrzeugkarosserie befestigt sein, wobei dann das sensorseitige Befestigungselement eine Bohrung, insbesondere eine Paßbohrung, für den Lagerbolzen enthält. Durch diese Maßnahme kann eine automatische Montage von sensorseitigem und schwenkarmseitigem Befestigungselement an der Fahrzeugkarosserie durchgeführt werden, wobei mit dem Lagerbolzen neben dem schwenkarmseitigen Befestigungselement gleichzeitig das darauf aufgeführte bzw. aufgesteckte sensorseitige Befestigungselement an der Fahrzeugkarosserie befestigt wird.

Gemäß einer weiteren Ausführungsform der erfindungsgemäßen Sensoranordnung können Positioniermittel vorgesehen sein, die zum selbsttätigen Auffinden einer vorgegebenen Relativlage des sensorseitigen Befestigungselementes bezüglich der Fahrzeugkarosserie dienen. Eine solche Positionierung ist insbesondere maschinell durchführbar. Durch die Vorgabe dieser Relativlage hängt die relative Lage des Sensors bezüglich des Schwenkarmes auch von den Herstellungs- und Montagetoleranzen der Einzelteile der Radaufhängung ab. Jedoch hat diese Abhängigkeit im Vergleich mit der erfindungsgemäß vorgegebenen Relativlage zwischen dem Sensor und dessen mit dem Schwenkarm gemeinsamer Befestigungs- bzw. Anlenkstelle an der Fahrzeugkarosserie einen erheblich kleineren Einfluß auf die Justierung der Ausgangs-Relativlage zwischen Schwenkarm und Fahrzeugkarosserie, so daß nur ein geringer Toleranzausgleich notwendig ist. Dieser ist elektronisch durchführbar, ohne daß dabei der Meßbereich und/oder die Meßgenauigkeit des Sensors merklich beeinträchtigt werden.

Weitere wichtige Merkmale und Vorteile der erfindungsgemäßen Sensoranordnung ergeben sich aus den Unteransprüchen, aus den Zeichnungen und aus der nachfolgenden Figurenbeschreibung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in den Zeichnungen dargestellt und wird in der nachfolgenden Beschreibung näher erläutert. Es zeigen, jeweils schematisch,
- Fig. 1: eine perspektivische Frontansicht auf eine Sensoranordnung an einer nur teilweise dargestellten Radaufhängung,
- Fig. 2: eine perspektivische Rückansicht auf die Sensoranordnung aus Fig. 1 und
- Fig. 3: eine räumliche Darstellung eines Sensorhalters nach der Erfindung.

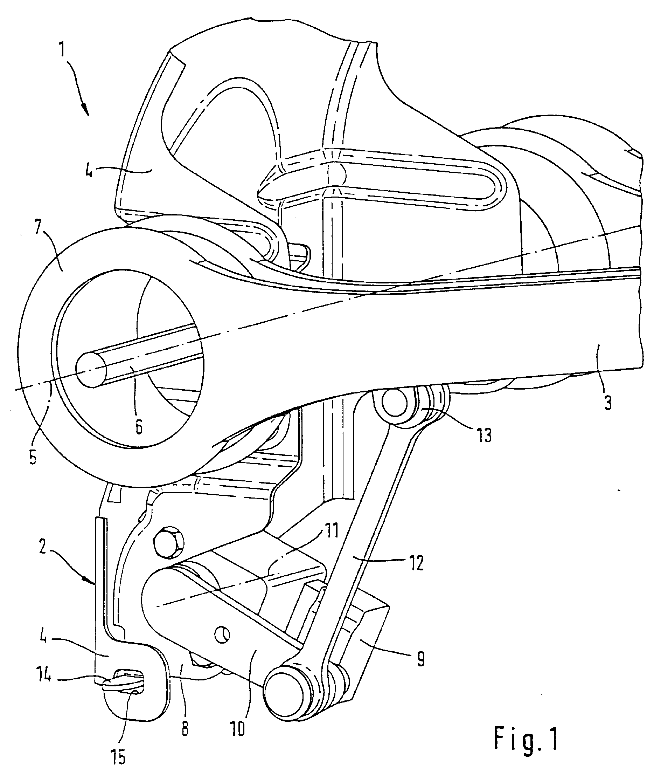

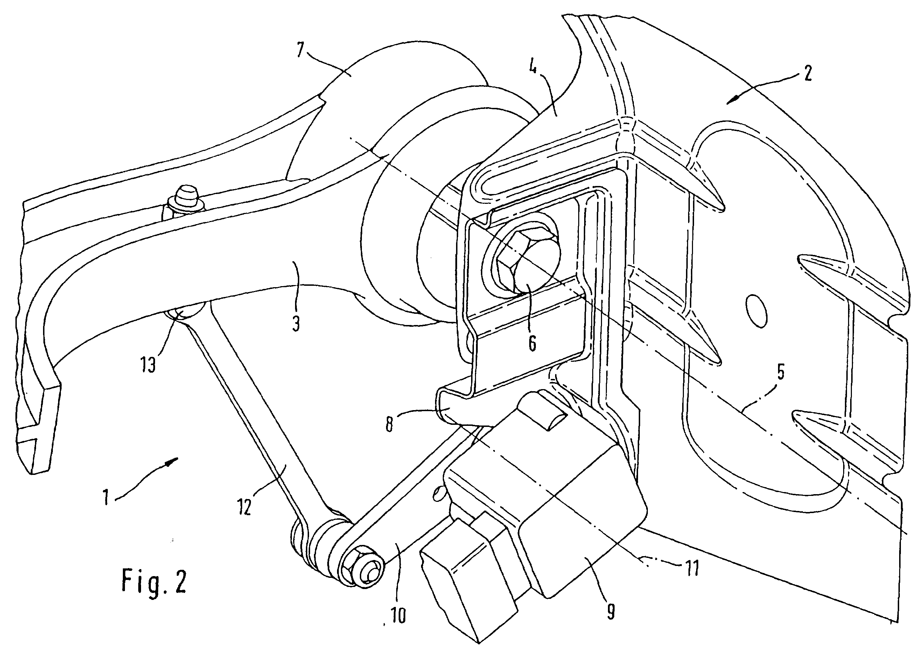

Entsprechend den Fig. 1 und 2 ist die erfindungsgemäße Sensoranordnung an einer Radaufhängung 1 vorgesehen, mit der ein nicht dargestelltes Rad eines im übrigen nicht dargestellten Fahrzeuges an dessen Karosserie 2 angebracht ist. Im einzelnen handelt es sich bei dem in den Fig. 1 und 2 dargestellten Abschnitt der Radaufhängung 1 um den Lagerbereich eines als Schwenkarm ausgebildeten Querlenkers 3 der Radaufhängung 1 an der Fahrzeugkarosserie 2. Zur Anbringung des Querlenkers 3 ist an der Fahrzeugkarosserie 2 eine Lagerkonsole 4 ausgebildet, an welcher der Querlenker 3 schwenkbar um eine Schwenkachse 5 gelagert ist.

Die schwenkbare Befestigung des Querlenkers 3 an der Fahrzeugkarosserie 2 bzw. an deren Lagekonsole 4 wird mit Hilfe eines als Befestigungsschraube ausgebildeten Lagerbolzens 6 hergestellt, der die Lagerkonsole 4 durchdringt und mit einem nicht dargestellten Schwenklager des Querlenkers 3 verschraubt ist. Das vorgenannte Schwenklager ist in einem Auge 7 des Querlenkers 3 angeordnet und der Übersichtlichkeit wegen nicht dargestellt.

Der Lagerbolzen 6 durchdringt die Lagerkonsole 4 in einer dafür vorgesehenen, in den Fig. 1 und 2 jedoch nicht sichtbaren Öffnung, durch die die Relativlage der Schwenkachse 5 bezüglich der Fahrzeugkarosserie 2 festgelegt wird. Um die im Rahmen des Zusammenbaus der Radaufhängung sich aufsummierenden Fertigungs- und Montagetoleranzen der einzelnen Bauteile auszugleichen, wird die vorgenannte Öffnung für den Lagerbolzen 6 an der im übrigen weitgehend fertiggestellten Fahrzeugkarosserie 2 nachträglich angebracht. Dabei wir die Positionierung der Öffnung in der Lagerkonsole 4 für den Lagerbolzen 6 in Abhängigkeit der sich für jeden Montagefall individuell ergebenden, für eine optimale Funktionsfähigkeit der Radaufhängung 1 erforderlichen Relativlage zwischen Schwenkachse 5 und Fahrzeugkarosserie 2 durchgeführt.

Gleichzeitig mit dem nicht dargestellten Schwenklager des Querlenkers 3 wird mit Hilfe des Lagerbolzens 6 ein Sensorhalter 8 an der Fahrzeugkarosserie 2 befestigt. Bei der dargestellten Ausführungsform wird der Sensorhalter 8 dabei nach Art einer Unterlegscheibe auf der dem Schwenklager des Querlenkers 3 gegenüberliegenden Seite der Lagerkonsole 4 zwischen dem Kopf des Lagerbolzens 6 und der Lagerkonsole 4 verspannt. Der Lagerbolzen 6 bzw. die dafür in der Lagerkonsole 4 vorgesehene Öffnung bildet somit für den Querlenker 3 und den Sensorhalter 8 eine gemeinsame Befestigungsstelle an der Fahrzeugkarosserie 2.

Entsprechend den Fig. 1 und 2 ist etwa senkrecht unterhalb der Befestigungsstelle (Lagerbolzen 6) des Sensorhalters 8 an der Fahrzeugkarosserie 2 am Sensorhalter 8 ein Sensor 9 befestigt. Der Sensor 9 weist einen Schwenkhebel 10 auf, der einenends um eine Schwenkhebelachse 11 am Sensor 9 gelagert ist und der anderenends gelenkig mit einer Regelstange 12 verbunden ist. Die Regelstange 12 ist ihrerseits an ihrem vom Schwenkhebel 10 abgewandten Ende an einer Anlenkstelle 13 gelenkig mit dem Querlenker 3 verbunden. Auf diese Weise ist der Sensor 9 mechanisch mit dem Querlenker 3 gekoppelt. Schwenkbewegungen des Querlenkers 3 um seine Schwenkachse 5 werden von der Regelstange 12 auf den Schwenkhebel 10 übertragen und somit vom Sensor 9 erfaßt. Bei bekannter Relativlage des Sensors 9 bezüglich der Fahrzeugkarosserie 2 kann daher über den Sensor 9 die Relativlage des Querlenkers 3 und somit des daran gekoppelten Fahrzeugrades relativ zur Fahrzeugkarosserie detektiert werden und beispielsweise in Form von durch den Sensor 9 generierten Signalwerten an eine Niveauregulierungseinrichtung weitergeleitet werden.

Da die Auslenkung des Schwenkhebels 10 am Sensor 9 das vom Sensor 9 erfaßbare Eingangssignal bildet, müssen zum einen die Schwenkachse 5 des Querlenkers 3 und die vorzugsweise parallel dazu verlaufende Schwenkhebelachse 11 am Sensor 9 einen definierten Abstand voneinander aufweisen. Zum anderen muß bei Vorliegen einer Referenzlage oder Ausgangs-Relativlage des Querlenkers 3 eine definierte Ausgangsauslenkung oder Ausgangsstellung für den Schwenkhebel 10 eingehalten werden. Da der Abstand zwischen der Schwenkhebelachse 11 und der Schwenkachse 5 aufgrund der erfindungsgemäßen Anordnung des Sensors 9 am Sensorhalter 8 einerseits und wegen der gemeinsamen Befestigung des Sensorhalters 8 und des Querlenkers 3 an der Fahrzeugkarosserie 2 andererseits definiert ist, muß zur Erzielung der erforderlichen Auslenkung des Schwenkhebels 10 während der Montage des Sensorhalters 8 nur noch ein bestimmter Winkel eingehalten werden, der sich zwischen zwei sich in der Schwenkachse 5 schneidenden Geraden ausbildet, wobei die erste Gerade durch die Anlenkstelle 13 der Regelstange 12 am Querlenker 3 und die zweite Gerade durch die Schwenkhebelachse 11 verläuft.

Da die Referenzlage des Querlenkers 3 durch eine bestimmte Relativlage des Querlenkers 3 bezüglich der Fahrzeugkarosserie 2 definiert ist, kann der vorgenannte Winkel dadurch eingestellt werden, daß der Sensorhalter 8 in einer bestimmten Relativlage bezüglich der Fahrzeugkarosserie 2 an dieser befestigt wird.

Zum Auffinden dieser Relativlage des Sensorhalters 8 relativ zur Fahrzeugkarosserie 2 sind Positioniermittel 14 und 15 vorgesehen. Im dargestellten Ausführungsbeispiel bestehen die Positioniermittel aus einer Zunge 14, die am Sensorhalter 8 angebracht ist, und aus einer Öffnung 15, die an der Lagerkonsole 4 ausgebildet ist. Die Zunge 14 erstreckt sich von dem Sensorhalter 8 etwa parallel zur Schwenkachse 5 in Richtung auf die Lagerkonsole 4. Bei montiertem Sensorhalter 8 durchdringt die Zunge 14 dabei die Öffnung 15.

Da die Referenzlage des Querlenkers 3 aufgrund der Fertigungs- und Montagetoleranzen im Rahmen der Endmontage der Radaufhängung 1 bezüglich der vertikalen und horizontalen Anordnung des Querlenkers 3 an der Fahrzeugkarosserie 2 unterschiedlich ausfallen kann, weisen die Positioniermittel (Zunge 14 und Öffnung 15) Spiel auf. Da die Positioniermittel (14 und 15) etwa vertikal unterhalb der Befestigungsstelle (Lagerbolzen 6) des Sensorhalters 8 an der Fahrzeugkarosserie 2 angeordnet sind, braucht das genannten Spiel im wesentlichen nur in vertikaler Richtung ausgebildet sein. Dieses Vertikalspiel wird bei der dargestellten Ausführungsform dadurch erreicht, daß die Öffnung 15 als vertikal verlaufendes Langloch ausgebildet ist.

Wenn die vorgenannten Fertigungs- und Montagetoleranzen eine Veränderung der Relativlage des Querlenkers 3 bezüglich der Fahrzeugkarosserie 2 in horizontaler Richtung bewirken, kann dies durch eine geringfügige Drehverstellung des Sensorhalters 8 ausgeglichen werden, wobei sich die Zunge 14 in der Öffnung 15 leicht drehen kann. Dementsprechend weisen die Positioniermittel (Zunge 14 und Öffnung 15) wenig Horizontalspiel auf.

Auftretende Abweichungen zwischen der gewünschten Soll-Relativlage des Sensorhalters 8 bezüglich des Querlenkers 3 in dessen Referenzstellung, können beispielsweise durch eine elektronische Kalibrierung ausgeglichen werden, bei der sich aufgrund der Anordnung von Schwenkhebel 10 und Regelstange 12 kaum eine Beeinträchtigung für den Meßbereich oder die Meßgenauigkeit des Sensors 9 ergibt.

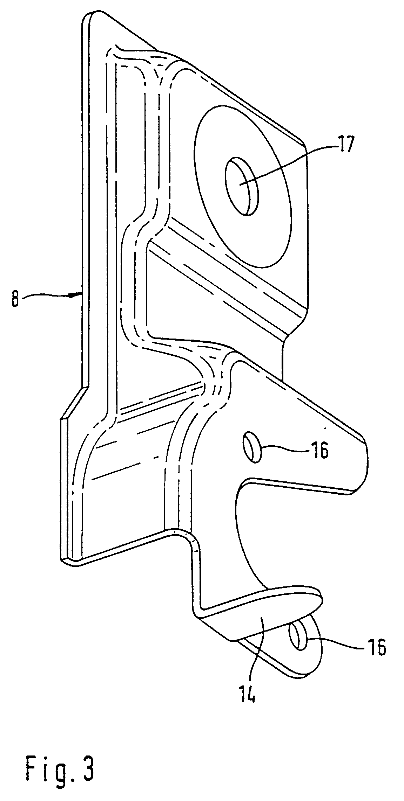

Entsprechend Fig. 3 ist die Zunge 14 des Sensorhalters 8 an ihrem freien Ende konvergierend ausgebildet. Durch diese Maßnahme wird eine automatisierte Montage des Sensorhalters 8 vereinfacht, da im Verlaufe einer maschinell durchgeführten Aufsteckbewegung die vorangehende Spitze der Zunge 14 leicht in die Öffnung 15 eindringen kann. Im weiteren Verlaufe der Aufsteckbewegung bewirkt die breiter werdende Zunge 14 eine Ausichtung des Sensorhalters 8 relativ zur Fahrzeugkarosserie 2. Im Sensorhalter 8 sind Öffnungen 16 vorgesehen, die zur Positionierung und Befestigung des Sensors 9 dienen. Außerdem weist der Sensorhalter 8 eine Öffnung 17 auf, durch die der Lagerbolzen 6 für die Befestigung des Sensorhalters 8 an der Fahrzeugkarosserie 2 den Sensorhalter 8 durchdringt.

Da erfindungsgemäß eine gemeinsame Befestigungsstelle der Lagerbolzen 6 für ein sensorseitiges Befestigungselement (Sensorhalter 8) und ein schwenkarmseitiges Befestigungselement (nicht dargestelltes Schwenklager des Querlenkers 3) an der Fahrzeugkarosserie 2 vorgesehen ist, können sich Fertigungs- und Montagetoleranzen aller übrigen Bauteile der Radaufhängung 1 nicht auf den Abstand des Sensors 9 zur Schwenkachse 5 auswirken. Ein Toleranzausgleich ist diesbezüglich somit nicht mehr erforderlich. Jedoch ist bei der Herstellung des Sensorhalters 8 insbesondere darauf zu achten, daß zum einen die relative Lage der Öffnungen 16 für die Befestigung des Sensors 9 hinsichtlich der Öffnung 17 für den Lagerbolzen 6 in einem vergleichsweise engen Toleranzbereich ausgebildet werden. Zum anderen können die genannten Öffnungen 16 und 17 zentrierende Eigenschaften aufweisen, was beispielsweise durch eine enge Passung, insbesondere eine Preßpassung, realisiert werden kann.

Anstelle des im Ausführungsbeispiel dargestellten separaten Sensorhalters 8 kann auch ein Gehäuse des Sensors 9 entsprechend ausgebildet sein und z.B. die Öffnung 17 für den Lagerbolzen 6 enthalten und mit entsprechenden Positioniermitteln ausgestattet sein.

## Patentansprüche

1. Sensoranordnung an einer Radaufhängung für ein Fahrzeug, bei der ein Schwenkarm an einer Fahrzeugkarosserie schwenkbar gelagert ist und bei der ein Sensor zur Detektion der Relativlage zwischen Schwenkarm und Fahrzeugkarosserie ortsfest an der Fahrzeugkarosserie angebracht und mechanisch mit dem Schwenkarm gekoppelt ist,
**dadurch gekennzeichnet**,
daß ein sensorseitiges Befestigungselement und ein schwenkarmseitiges Befestigungselement an einer gemeinsamen Befestigungsstelle (6) an der Fahrzeugkarosserie (2) befestigt sind,
wobei das sensorseitige Befestigungselement durch eine sensorfeste Sensorhalterung (8) gebildet ist und wobei das schwenkarmseitige Befestigungselement ein Schwenklager des Schwenkarmes (3) ist, durch das der Schwenkarm (3) an der Fahrzeugkarosserie (2) schwenkbar befestigt ist.

2. Sensoranordnung nach Anspruch 1,
**dadurch gekennzeichnet**,
daß die Sensorhalterung ein als separates Bauteil ausgebildeter Sensorhalter (8) ist, an dem der Sensor (9) befestigt ist.

3. Sensoranordnung nach Anspruch 1 oder 2,
**dadurch gekennzeichnet**,
daß die gemeinsame Befestigungsstelle von sensorseitigem Befestigungselement (8) und schwenkarmseitigen Befestigungselement durch einen die Schwenkachse (5) des Schwenkarmes (3) bildenden Lagerbolzen (6) gebildet ist, daß das schwenkarmseitige Befestigungselement durch den Lagerbolzen (6) schwenkbar an der Fahrzeugkarosserie (2) befestigt ist und
daß das sensorseitige Befestigungselement (8) eine Paßbohrung (17) für den Lagerbolzen (6) enthält.

4. Sensoranordnung nach Anspruch 3,
**dadurch gekennzeichnet**,
daß der Lagerbolzen (6) als Befestigungsschraube ausgebildet ist, mit der das sensorseitige Befestigungselement (8) zusammen mit dem schwenkarmseitigen Befestigungselement an der Fahrzeugkarosserie (2) befestigt ist.

5. Sensoranordnung nach einem der vorhergehenden Ansprüche,
**dadurch gekennzeichnet**,
daß Positioniermittel (14,15) vorgesehen sind, die zum Auffinden einer vorgegebenen Relativlage des sensorseitigen Befestigungselementes (8) bezüglich der Fahrzeugkarosserie (2) dienen.

6. Sensoranordnung nach Anspruch 5,
**dadurch gekennzeichnet**,
daß die Positioniermittel eine von der Schwenkachse (5) beabstandete Zunge (14) sowie eine Öffnung (15) aufweisen, in welche die Zunge zur (14) Positionierung eindringt.

7. Sensoranordnung nach Anspruch 6,
**dadurch gekennzeichnet**,
daß die Öffnung (15) als Langloch ausgebildet ist, wobei die in das Langloch einragende Zunge (14) Spiel in etwa radialer Richtung bezüglich der Schwenkachse (5) des Schwenkarmes (3) aufweist.

8. Sensoranordnung nach Anspruch 6 oder 7,
**dadurch gekennzeichnet**,
daß sich die Zunge (14) zu ihrem freien Ende hin verjüngt und in einem davon abgewandten Abschnitt im wesentlichen ein Außenmaß aufweist, das dem lichten Innenmaß der Öffnung (15) entspricht.

9. Sensoranordnung nach einem der Ansprüche 2 bis 5 und einem der Ansprüche 6 bis 8,
**dadurch gekennzeichnet**,
daß die Zunge (14) am Sensorhalter (8) ausgebildet ist und
daß die Öffnung (15) in der Fahrzeugkarosserie (2) vorgesehen ist.

10. Sensoranordnung nach einem der vorhergehenden Ansprüche,
**dadurch gekennzeichnet**,
daß der Schwenkarm als Querlenker (3) der Radaufhängung (1) ausgebildet ist.

11. Sensoranordnung nach einem der vorhergehenden Ansprüche,
**dadurch gekennzeichnet**,
daß der Sensor (9) ein Hubsensor ist, der an eine Niveauregulierung des Fahrzeuges angeschlossen ist.

12. Sensorhalter zum Befestigen eines Sensors (9) an einer Fahrzeugkarosserie (2) zur Ausbildung einer Sensoranordnung nach einem der Ansprüche 2 bis 11.
